# EUROPÄISCHE PATENTSCHRIFT

(11) **EP 0 663 253 B1**
(45) Veröffentlichungstag und Bekanntmachung des Hinweises auf die Patenterteilung: **18.03.1998**
(21) Anmeldenummer: 94119105.8
(22) Anmeldetag: 03.12.1994
(51) Int. Cl.: B23B 31/30

(54) **Spanneinrichtung an Werkzeugmaschinen mit einem umlaufenden Spannzylinder**
Clamping device for machine tool with chucking cylinder
Dispositif de serrage pour machine-outil avec un verin de serrage rotatif

(30) Priorität: 17.01.1994 DE 4401142
(43) Veröffentlichungstag der Anmeldung: 19.07.1995
(73) Patentinhaber: Röhm, Günter Horst, D-89567 Sontheim (DE)
(72) Erfinder: Weichler, Helmut, D-89429 Bachhagel (DE)
(74) Vertreter: Fay, Hermann, Dipl.-Phys. Dr.

(56) Entgegenhaltungen:
- DE-A- 3 826 215

## Beschreibung

Die Erfindung betrifft eine Spanneinrichtung an Werkzeugmaschinen mit einem umlaufenden Spannzylinder und einem darin mitumlaufend angeordneten, axial verschiebbaren Spannkolben, ferner mit einem Verteiler, der ein die Anschlüsse für das Arbeitsmedium tragendes Verteilergehäuse und eine mit dem Spannkolben verbundene und in der Wand des Spannzylinders axial verschiebbare Verteilerwelle umfaßt, auf der das Verteilergehäuse so angeordnet ist, daß die Verteilerwelle darin umlaufen kann und das Verteilergehäuse bei den Axialverschiebungen des Spannkolbens mitnimmt, und mit einer Kontrolleinrichtung für die Axialverschiebungen des Spannkolbens, die mindestens ein erstes Schaltstück und mindestens ein davon in einer der beiden Endstellungen des Spannkolbenhubs betätigbares Schaltglied aufweist, von welchem das eine mit dem Verteilergehäuse verbunden und das andere an einer Schaltstange angeordnet ist, die axial längsverschieblich am Verteilergehäuse geführt und mittels eines am Spannzylinder angeordneten Drehlagers gegen Axialverschiebungen relativ zum Spannzylinder festgelegt ist, und wobei die Kontrolleinrichtung außerdem ein zweites Schaltstück aufweist, das dasselbe oder ein zweites Schaltglied in der anderen Endstellung des Spannkolbenhubs betätigt.

Aus der DE 38 26 215 C1 sind Spanneinrichtungen dieser Art bekannt, die den Vorteil bieten, daß der Hub des Spannkolbens im Spannzylinder begrenzt und diese Hubbegrenzung nach Wunsch verstellt werden kann, so daß nicht immer der maximal mögliche Spannweg des Spannkolbens voll ausgefahren werden muß, sondern der Spannweg auf die tatsächlich jeweils nur benötigte Länge eingestellt und durch den kürzeren Spannweg Zeit gespart werden kann. Im einzelnen ist für diese Hubbegrenzung und ihre Verstellbarkeit am Spannzylinder außen ein in einem koaxialen Gewinde verdrehbarer Gewindering vorgesehen, der in seiner dem Spannzylinder zugewandten Stirnfläche eine hinterschnittene Ringnut aufweist, in die in Bezug auf den Gewindering axial unverstellbar, aber längs der Ringnut verschiebbar Anschlagbolzen eingehängt sind, die längsverschiebbar und abgedichtet axial durch die Stirnwand des Spannzylnders in den Zylinderraum vorstehen und Anschläge für den Spannkolben bilden. Wird der Gewindering verdreht, verstellt er sich entsprechend axial und nimmt dabei die Anschlagbolzen mit, die sich somit axial im Spannzylinder verstellen und dadurch die Hubbegrenzung für den Spannkolben ändern. - Das erste und das zweite Schaltstück für die Kontrolle der beiden Endstellungen des Spannkolbenhubs sitzen auf der Schaltstange und betätigen je ein eigenes Schaltglied am Verteilergehäuse, wobei die Schaltstücke auf der Schaltstange entsprechend den Endstellungen des Spannkolbenhubs verschiebbar und einstellbar sind. Wird daher die durch die Anschlagbolzen bestimmte Endstellung des Spannkolbenhubs durch Verdrehen des Gewinderings geändert, muß auch das dieser Endstellung zugeordnete Schaltstück an der Schaltstange entsprechend neu eingestellt werden. Dies beansprucht nicht nur Zeit, sondern kann in der Praxis auch sehr umständlich sein, wenn die Kontrolleinrichtung schwer zugänglich ist, etwa bei vertikal ausgerichteter Arbeitsspindel mit dann unten liegendem Spannzylinder und Verteiler.

Der Erfindung liegt die Aufgabe zugrunde, eine Spanneinrichtung der eingangs genannten Art so auszubilden, daß bei einer Verstellung der Begrenzung des Spannkolbenhubs auch die Kontrolleinrichtung für die Axialverschiebungen des Spannkolbens in einfacher Weise entsprechend verstellbar ist.

Diese Aufgabe wird nach der Erfindung dadurch gelöst, daß der Spannzylinder auf der Seite zum Verteilergehäuse hin eine mit der Verteilerwelle koaxiale Anschlagbuchse trägt, in der die Verteilerwelle axial verschiebbar ist, wobei die Anschlagbuchse einen den Spannkolbenhub begrenzenden Anschlag für die Verteilerwelle bildet und am Spannzylinder axial ver- und feststellbar ist, und daß das zweite Schaltstück oder Schaltglied an einer zweiten Schaltstange angeordnet ist, die axial längsverschieblich am Verteilergehäuse geführt und mittels eines an der Anschlagbuchse angeordneten Drehlagers gegen Axialverschiebungen relativ zur Anschlagbuchse festgelegt ist.

Wird durch axiales Verstellen der Anschlagbuchse die Begrenzung des Spannkolbenhubs geändert, so wird dadurch zugleich auch entsprechend die Einstellung der zweiten Schaltstange und damit des zweiten Schaltstücks in Bezug auf das Verteilergehäuse und die Schaltglieder verändert, so daß die Anpassung der Kontrolleinrichtung an eine Änderung der Spannhubbegrenzung selbsttätig erfolgt und keines eigenen Arbeitsganges bedarf. - Im übrigen erfolgt der den Spannkolbenhub begrenzende Anschlag unmittelbar zwischen der Anschlagbuchse und der Verteilerwelle, also außerhalb des Zylinderraums des Spannzylinders. Die bei den bekannten, eingangs besprochenen Spanneinrichtungen erforderlichen, in den Zylinderraum vorstehenden Anschlagbolzen mit ihrer aufwendigen Abdichtung gegen die Stirnwand des Spannzylinders entfallen daher.

Eine bevorzugte Ausführungsform der Erfindung ist dadurch gekennzeichnet, daß die Anschlagbuchse mit ihrem vom Verteiler abgewandten Ende in einen axialen Kragen am Spannzylinder greift und mit einem Außengewinde in einem im Kragen vorgesehenen Innengewinde geführt ist, so daß die Anschlagbuchse durch Verdrehen in ihrer axialen Lage relativ zum Spannzylinder verstellbar ist, und daß auf dem Außengewinde eine Kontermutter geführt ist, die zur axialen Feststellung der Anschlagbuchse gegen den Rand des Kragens verspannbar ist. Zweckmäßigerweise ist die Verteilerwelle für den Anschlag an der Anschlagbuchse mit einer Ringschulter versehen, die an dem vom Verteiler abgewandten Ende der Anschlagbuchse zur Anlage kommt. An ihrem anderen, dem Verteiler zugewandten Ende trägt die Anschlagbuchse vorzugsweise einen Ringbund, der als Handhabe zum Verstellen der Anschlagbuchse ausgebildet und an dem das Drehlager für die Festlegung der zweiten Schaltstange angeordnet ist. Im übrigen kann zweckmäßigerweise die zweite Schaltstange an ihrem dem Spannzylinder zugewandten Ende an einen Reiter angeschlossen sein und das ihre Axiallage relativ zur Anschlagbuchse festlegende Drehlager einen in Bezug auf die Anschlagbuchse koaxialen, drehbaren und axial unverschiebbaren Lagerring aufweisen, an dem der Reiter mit axialem Formschluß eingehängt ist.

In weiterer vorteilhafter Ausbildung der Erfindung empfiehlt es sich, die Anordnung so zu treffen, daß die erste, relativ zum Spannzylinder axial festgelegte Schaltstange in einer Führungsaufnahme eines am Verteilergehäuse befestigten Führungsgehäuses geführt und darin zu einem Führungskörper ausgebildet ist, der mit einer Führungsaufnahme für die zweite, relativ zur Anschlagbuchse axial festgelegte Schaltstange versehen ist, die gegenüber der ersten Schaltstange seitlich versetzt ist. Der Führungskörper ist von Vorteil für die Führungsgualität der ersten Schaltstange im Führungsgehäuse, ohne dadurch aber die Bauabmessungen des Führungsgehäuses unnötig zu vergrößern, weil die Zweite Schaltstange, die um die Länge der Anschlagbuchse kürzer als die erste Schaltstange ist, ihre Führung unmittelbar im Führungskörper selbst erfährt. Eine bevorzugte Ausführungsform ist dabei im einzelnen dadurch gekennzeichnet, daß senkrecht zur Spannzylinderachse der Führungskörper und die Führungsaufnahme des Führungsgehäuses rechteckigen Querschnitt und die zweite Schaltstange und die für sie im Führungskörper vorgesehene Führungsaufnahme kreisförmigen Querschnitt aufweisen, wobei diese Führungsaufnahme durch einen axial verlaufenden Schlitz geöffnet ist, aus dem das an der zweiten Schaltstange angeordnete zweite Schaltstück gegen eines der am Führungsgehäuse befestigten Schaltglieder vorsteht.

Im folgenden wird die Erfindung an einem in der Zeichnung dargestellten Ausführungsbeispiel näher erläutert; es zeigen:

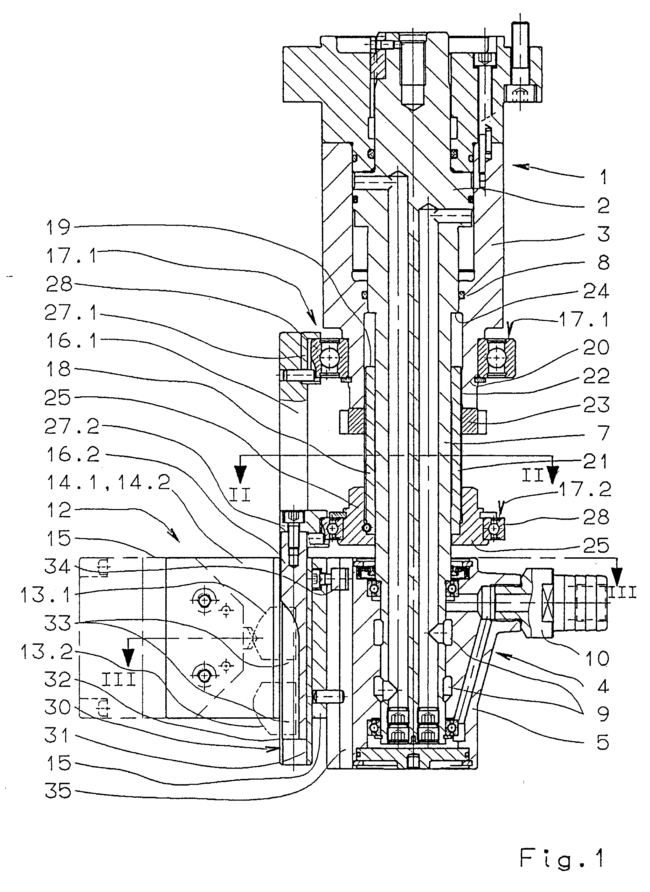

- Fig. 1: einen Axialschnitt durch eine Spanneinrichtung nach der Erfindung,

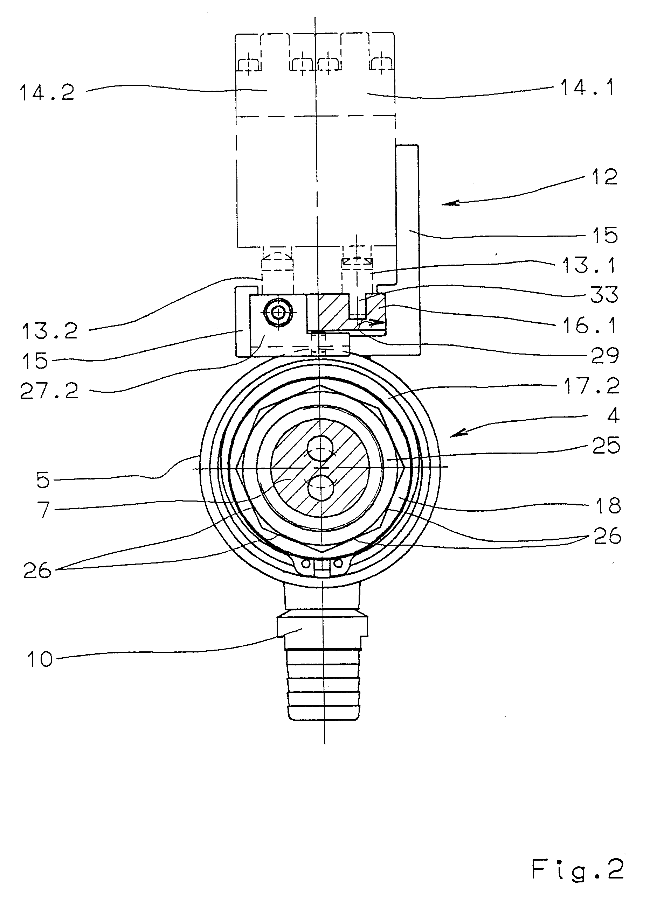

- Fig. 2: den Schnitt in Richtung II - II durch die Spanneinrichtung nach Fig. 1 und

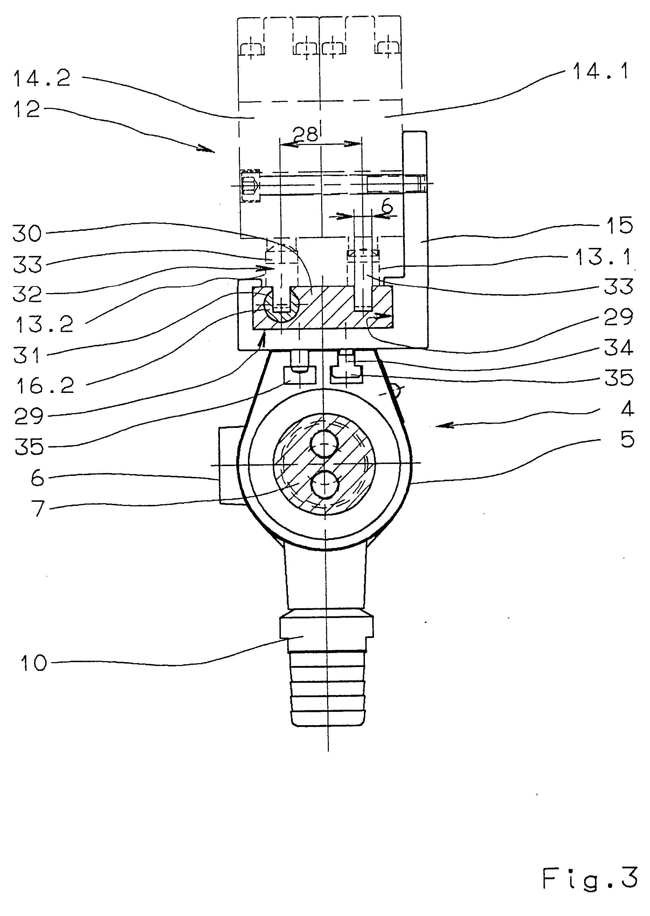

- Fig. 3: den Schnitt in Richtung III - III durch die Spanneinrichtung nach Fig. 1.

Der in der Zeichnung dargestellte Spannzylinder 1 für Spanneinrichtungen an Werkzeugmaschinen besteht zunächst aus einem Zylindergehäuse 3 mit einem darin verschiebbaren Spannkolben 2, der an seiner in der Zeichnung rechten Seite an eine nicht dargestellte Spannstange einer ebenfalls nicht gezeigten Arbeitsspindel einer Werkzeugmaschine angeschlossen ist. Normalerweise ist das Zylindergehäuse 3 am Ende der Arbeitsspindel befestigt und läuft einschließlich des Spannkolbens 2 mit dieser um.

An den Spannzylinder 1 ist ein allgemein mit 4 bezeichneter Verteiler angeschlossen. Dieser Verteiler besitzt ein nicht mit dem Spannzylinder rotierendes Verteilergehäuse 5, das seitlich liegende Anschlüsse 6 für das den Spannzylinder 1 betätigende Arbeitsmedium trägt. Im Verteilergehäuse 5 läuft eine Verteilerwelle 7 um, auf der das Verteilergehäuse 5 drehbar gelagert und axial unverrückbar gehalten ist. Die Verteilerwelle 7 ist fest mit dem Spannkolben 2 verbunden und bei 8 axial verschiebbar in der Wand des Spannzylinders 1 gelagert. Im Ergebnis wird eine Verstellung des Spannkolbens 2 in axialer Richtung unverändert über die Verteilerwelle 7 auf das Verteilergehäuse 5 übertragen, das somit dieselben Axialbewegungen wie der Spannkolben 2 ausführt.

Die auf der Innenseite des Verteilergehäuses 5 umlaufenden Ringnuten 9 dienen zur Zu- und Abführung des Arbeitsmediums und stehen mit den Anschlüssen 6 für das Arbeitsmedium in Verbindung. Zwischen der Verteilerwelle 7 und dem Verteilergehäuse 5 durchtretendes Lecköl wird durch den Anschluß 10 abgeleitet. Die Verteilerwelle 7 besitzt zwei in den Spannzylinder 1 zu entgegen gesetzten Seiten des Spannkolbens 2 führende Wellenkanäle 11, die mit den Ringnuten 9 in Verbindung stehen. Die Steuerung des Arbeitsmediums durch die Wellenkanäle 11 wahlweise zu einer der beiden Seiten des Spannkolbens 2 erfolgt in üblicher Weise und bedarf keiner Beschreibung.

Zur Wegkontrolle der Axialverschiebungen des Spannkolbens 2 ist eine allgemein mit 12 bezeichnete Kontrolleinrichtung vorgesehen, die ein erstes Schaltstück 13.1 und ein davon in der vorderen Endstellung des Spannkolbenhubs betätigbares Schaltglied 14.1, im dargestellten Fall einen Berührungsschalter, aufweist. Das Schaltglied 14.1 ist über ein Führungsgehäuse 15 mit dem Verteilergehäuse 5 verbunden und das erste Schaltstück 13.1 an einer ersten Schaltstange 16.1 angeordnet, die axial längsverschieblich im Führungsgehäuse 15 am Verteilergehäuse 5 geführt ist. Die Schaltstange 16.1 ist weiter mittels eines am Spannzylinder 1 angeordneten Drehlagers 17.1 gegen Axialverschiebungen relativ zum Spannzylinder 1 festgelegt, so daß die Schaltstange 16.1 an den Axialverschiebungen der Verteilerwelle 7, des Verteilergehäuses 5 und des Führungsgehäuses 15 nicht teilnimmt. Die Kontrolleinrichtung 12 verfügt weiter über ein zweites Schaltstück 13.2, das ein zweites Schaltglied 14.2, ebenfalls einen Berührungsschalter, in der rückwärtigen Endstellung des Spannkolbenhubs betätigt. Die Schaltstücke 13.1, 13.2 und Schaltglieder 14.1, 14.2 sind in der Zeichnung der besseren Übersichtlichkeit wegen nur strichliert wiedergegeben.

Der Spannzylinder 1 trägt auf der Seite zum Verteilergehäuse 5 hin eine mit der Verteilerwelle 7 koaxiale Anschlagbuchse 18, in der die Verteilerwelle 7 axial verschiebbar ist. Die Anschlagbuchse 18 bildet einen den Spannkolbenhub begrenzenden Anschlag 19 für die Verteilerwelle 7. Die Begrenzung des Spannkolbenhubs kann leicht dadurch verändert und eingestellt werden, daß die Anschlagbuchse 18 am Spannzylinder 1 axial ver- und feststellbar ist. Das zweite Schaltstück 13.2 ist an einer zweiten Schaltstange 16.2 angeordnet, die axial längsverschieblich am Verteilergehäuse 5 geführt und mittels eines an der Anschlagbuchse 18 angeordneten Drehlagers 17.2 gegen Axialverschiebungen relativ zur Anschlagbuchse 18 festgelegt ist. Diese zweite Schaltstange 16.2 und mit ihr das zweite Schaltstück 13.2 verschieben sich daher axial in gleicher Weise, wie die Anschlagbuchse 18 zur Änderung der Spannhubbegrenzung axial verstellt wird.

Die Anschlagbuchse 18 greift mit ihrem vom Verteiler 4 abgewandten Ende in einen Zugleich das erste Drehlager 17.1 tragenden axialen Kragen 20 am Spannzylinder 1 und ist mit einem Außengewinde 21 in einem im Kragen 20 vorgesehenen Innengewinde 22 geführt, so daß sie durch Verdrehen in ihrer axialen Lage relativ zum Spannzylinder 1 verstellt werden kann. Zur axialen Feststellung der Anschlagbuchse 18 in ihrer jeweiligen Lage ist auf dem Außengewinde 21 eine Kontermutter 23 geführt, die gegen den Rand des Kragens 20 verspannt werden kann. Wird die Kontermutter 23 gelöst, kann die Anschlagbuchse 18 verdreht und dadurch axial verstellt werden. Durch erneutes Anziehen der Kontermutter 23 wird die neue Stellung der Anschlagbuchse 18 gesichert. Für den Anschlag 9 an der Anschlagbuchse 18 ist die Verteilerwelle 7 mit einer Ringschulter 24 versehen, die an dem vom Verteiler 4 abgewandten Ende der Anschlagbuchse 18 zur Anlage kommt. An ihrem dem Verteiler 4 zugewandten Ende trägt die Anschlagbuchse 18 einen Ringbund 25, der einerseits als Handhabe zum Verstellen der Anschlagbuchse 18, beispielsweise als Sechskant mit Schlüsselflächen 26 zum Ansetzen eines Schlüssels, ausgebildet und an dem andererseits das Drehlager 17.2 für die Festlegung der zweiten Schaltstange 16.2 angeordnet ist.

Beide Schaltstangen 16.1, 16.2 sind an ihren jeweils dem Spannzylinder 1 zugewandten Ende an einen Reiter 27.1, 27.2 angeschlossen. Das ihre axiale Lage relativ zum Spannzylinder 1 bzw. zur Anschlagbuchse 18 festlegende Drehlager 17.1, 17.2 besitzt einen in Bezug auf den Spannzylinder 1 bzw. die Anschlagbuchse 18 koaxialen, drehbaren und axial unverschiebbaren Lagerring 28, an dem der Reiter 27.1, 27.2 mit axialem Formschluß eingehängt ist. Die erste Schaltstange 16.1 ist in einer Führungsaufnahme 29 des am Verteilergehäuse 5 befestigten Führungsgehäuses 15 geführt und im Bereich dieser Führungsaufnahme 29 zu einem Führungskörper 30 ausgebildet, der in Führungsrichtung und quer dazu vorteilhaft große Führungsflächen besitzt und daher eine gute Führungsqualität für die vergleichsweise lange erste Schaltstange 16.1 ergibt. Für die zweite, gegenüber der ersten Schaltstange 16.1 seitlich versetzte Schaltstange 16.2 ist der Führungskörper 30 mit einer Führungsaufnahme 31 versehen. Gesehen senkrecht zur Spannzylinderachse besitzt der Führungskörper 30 und die Führungsaufnahme 29 des Führungsgehäuses 15 rechteckigen Querschnitt und die zweite Schaltstange 16.2 und die für sie im Führungskörper 30 vorgesehene Führungsaufnahme 31 kreisförmigen Querschnitt. Diese letztere Führungsaufnahme 31 ist nach oben hin durch einen axial verlaufenden Schlitz 32 geöffnet, aus dem das an der zweiten Schaltstange 16.2 angeordnete zweite Schaltstück 13.2 gegen das ihm zugeordnete, am Führungsgehäuse 15 befestigte Schaltglied 14.2 vorsteht. Im übrigen sind im Führungskörper 30 und in der zweiten Schaltstange 16.2 Längsnuten angeordnet, in welchen die Schaltstücke 13.1, 13.2 verschiebbar und feststellbar sind, was im einzelnen in der Zeichnung aber nicht dargestellt ist. Das Führungsgehäuse 15 ist am Verteilergehäuse 5 in Verstellrichtung der Schaltstangen 16.1, 16 verstellbar befestigt, wozu Klemmschrauben 34 dienen, deren Muttern als Nutsteine in T-Nuten 35 des Verteilergehäuses 5 verschiebbar sind.

Die Zeichnung zeigt den konstruktiv einfacheren Fall, daß die Schaltstücke 13.1, 13.2 an den Schaltstangen 16.1, 16.2 und die ihnen zugeordneten Schaltglieder 14.1, 14.2 am Führungsgehäuse 15 sitzen. Selbstverständlich ist aber auch eine Ausführungsform möglich, bei welchen umgekehrt die Schaltglieder 14.1, 14.2 an den Führungsstangen 16.1, 16.2 und die Schaltstücke 13.1, 13.2 am Führungsgehäuse 15 sitzen. Die beiden Schaltstücke 13.1, 13.2 können, anders als im Ausführungsbeispiel, auch nur ein einziges, beiden Schaltstücken gemeinsam zugeordnetes Schaltglied betätigen, soweit das Schaltglied am Führungsgehäuse 15 sitzt. In der anderen Ausführungsform mit an den Schaltstangen 16.1, 16.2 angeordneten Schaltgliedern 14.1, 14.2 kann ein einziges Schaltstück am Führungsgehäuse 15 genügen.

## Patentansprüche

1. Spanneinrichtung an Werkzeugmaschinen mit einem umlaufenden Spannzylinder (1) und einem darin mitumlaufend angeordneten, axial verschiebbaren Spannkolben (2), ferner mit einem Verteiler (4), der ein die Anschlüsse (6) für das Arbeitsmedium tragendes Verteilergehäuse (5) und eine mit dem Spannkolben (2) verbundene und in der Wand des Spannzylinders axial verschiebbare Verteilerwelle (7) umfaßt, auf der das Verteilergehäuse (5) so angeordnet ist, daß die Verteilerwelle (7) darin umlaufen kann und das Verteilergehäuse (5) bei den Axialverschiebungen des Spannkolbens (2) mitnimmt, und mit einer Kontrolleinrichtung (12) für die Axialverschiebungen des Spannkolbens (2), die mindestens ein erstes Schaltstück (13.1) und mindestens ein davon in einer der beiden Endstellungen des Spannkolbenhubs betätigbares Schaltglied (14.1) aufweist, von welchem das eine mit dem Verteilergehäuse (5) verbunden und das andere an einer Schaltstange (16.1) angeordnet ist, die axial längsverschieblich am Verteilergehäuse (5) geführt und mittels eines am Spannzylinder (1) angeordneten Drehlagers (17.1) gegen Axialverschiebungen relativ zum Spannzylinder (1) festgelegt ist, und wobei die Kontrolleinrichtung (12) außerdem ein zweites Schaltstück (13.2) aufweist, das dasselbe oder ein zweites Schaltglied (14.2) in der anderen Endstellung des Spannkolbenhubs betätigt, dadurch gekennzeichnet, daß der Spannzylinder (1) auf der Seite zum Verteilergehäuse (5) hin eine mit der Verteilerwelle (7) koaxiale Anschlagbuchse (18) trägt, in der die Verteilerwelle (7) axial verschiebbar ist, wobei die Anschlagbuchse (18) einen den Spannkolbenhub begrenzenden Anschlag (19) für die Verteilerwelle (7) bildet und am Spannzylinder (1) axial ver- und feststellbar ist, und daß das zweite Schaltstück (13.2) oder Schaltglied (14.2) an einer zweiten Schaltstange (16.2) angeordnet ist, die axial längsverschieblich am Verteilergehäuse (5) geführt und mittels eines an der Anschlagbuchse (18) angeordneten Drehlagers (17.2) gegen Axialverschiebungen relativ zur Anschlagbuchse (18) festgelegt ist.

2. Spanneinrichtung nach Anspruch 1, dadurch gekennzeichnet, daß die Anschlagbuchse (18) mit ihrem vom Verteiler (4) abgewandten Ende in einen axialen Kragen (20) am Spannzylinder (1) greift und mit einem Außengewinde (21) in einem im Kragen (20) vorgesehenen Innengewinde (22) geführt ist, so daß die Anschlagbuchse (18) durch Verdrehen in ihrer axialen Lage relativ zum Spannzylinder (1) verstellbar ist, und daß auf dem Außengewinde (21) eine Kontermutter (23) geführt ist, die zur axialen Feststellung der Anschlagbuchse (18) gegen den Rand des Kragens (20) verspannbar ist.

3. Spanneinrichtung nach Anspruch 1 oder 2, dadurch gekennzeichnet, daß die Verteilerwelle (7) für den Anschlag an der Anschlagbuchse (18) eine Ringschulter (24) aufweist, die an dem vom Verteiler (4) abgewandten Ende der Anschlagbuchse (18) zur Anlage kommt.

4. Spanneinrichtung nach einem der Ansprüche 1 bis 3, dadurch gekennzeichnet, daß die Anschlagbuchse (18) an ihrem dem Verteiler (4) zugewandten Ende einen Ringbund (25) trägt, der als Handhabe zum Verstellen der Anschlagbuchse (18) ausgebildet und an dem das Drehlager (17.2) für die Festlegung der zweiten Schaltstange (16.2) angeordnet ist.

5. Spanneinrichtung nach einem der Ansprüche 1 bis 4, dadurch gekennzeichnet, daß die zweite Schaltstange (16.2) an ihrem dem Spannzylinder (1) zugewandten Ende an einen Reiter (27.2) angeschlossen ist und das ihre Axiallage relativ zur Anschlagbuchse (18) festlegende Drehlager einen in Bezug auf die Anschlagbuchse (18) koaxialen, drehbaren und axial unverschiebbaren Lagerring (28) aufweist, an dem der Reiter (27.2) mit axialem Formschluß eingehängt ist.

6. Spanneinrichtung nach einem der Ansprüche 1 bis 5, dadurch gekennzeichnet, daß die erste, relativ zum Spannzylinder (1) axial festgelegte Schaltstange (16.1) in einer Führungsaufnahme (29) eines am Verteilergehäuse (5) befestigten Führungsgehäuses (15) geführt und darin zu einem Führungskörper (30) ausgebildet ist, der mit einer Führungsaufnahme (31) für die zweite, relativ zur Anschlagbuchse (18) axial festgelegte Schaltstange (16.2) versehen ist, die gegenüber der ersten Schaltstange (16.1) seitlich versetzt ist.

7. Spanneinrichtung nach Anspruch 6, dadurch gekennzeichnet, daß senkrecht zur Spannzylinderachse der Führungskörper (30) und die Führungsaufnahme (29) des Führungsgehäuses (15) rechteckigen Querschnitt und die zweite Schaltstange (16.2) und die für sie im Führungskörper (30) vorgesehene Führungsaufnahme (31) kreisförmigen Querschnitt aufweisen, wobei diese Führungsaufnahme (31) durch einen axial verlaufenden Schlitz (32) geöffnet ist, aus dem das an der zweiten Schaltstange (16.2) angeordnete zweite Schaltstück (13.2) gegen eines der am Führungsgehäuse (15) befestigten Schaltglieder (14.1, 14.2) vorsteht.

## Claims

1. A clamping arrangement on machine tools having a rotating clamping cylinder (1) and an axially displaceable clamping piston (2) which is arranged also to rotate therein, further having a distributor (4) which includes a distributor housing (5) carrying the connections (6) for the working medium and a distributor shaft (7) which is connected to the clamping piston (2) and which is axially displaceable in the wall of the clamping cylinder and on which the distributor housing (5) is so arranged that the distributor shaft (7) can rotate therein and entrains the distributor housing (5) in the axial displacements of the clamping piston (2), and having a monitoring device (12) for the axial displacements of the clamping piston (2), which has at least one first switching portion (13.1) and at least one switching member (14.1) which is actuable thereby in one of the two limit positions of the clamping piston stroke movement, of which one is connected to the distributor housing (5) and the other is arranged on a switching bar (16.1) which is axially longitudinally displaceably guided on the distributor housing (5) and which by means of a rotary bearing (17.1) arranged on the clamping cylinder (1) is fixed to prevent axial displacements relative to the clamping cylinder (1), and wherein the monitoring device (12) has in addition a second switching portion (13.2) which actuates the same or a second switching member (14.2) in the other limit position of the clamping piston stroke movement, characterised in that on the side towards the distributor housing (5) the clamping cylinder (1) carries an abutment sleeve (18) which is coaxial with the distributor shaft (7) and in which the distributor shaft (7) is axially displaceable, wherein the abutment sleeve (18) forms an abutment (19) for the distributor shaft (7), for delimiting the clamping piston stroke movement, and is axially displaceable and fixable on the clamping cylinder (1), and that the second switching portion (13.2) or switching member (14.2) is arranged on a second switching bar (16.2) which is axially longitudinally displaceably guided on the distributor housing (5) and which by means of a rotary bearing (17.2) arranged on the abutment sleeve (18) is fixed to prevent axial displacements relative to the abutment sleeve (18).

2. A clamping arrangement according to claim 1 characterised in that with its end remote from the distributor (4) the abutment sleeve (18) engages into an axial collar (20) on the clamping cylinder (1) and is guided with a male screwthread (21) in a female screwthread (22) provided in the collar (20) so that the abutment sleeve (18) is adjustable by rotation in respect of its axial position relative to the clamping cylinder (1) and that guided on the male screwthread (21) is a lock nut (23) which can be braced against the edge of the collar (20) for axially fixing the abutment sleeve (18).

3. A clamping arrangement according to claim 1 or claim 2 characterised in that for abutment against the abutment sleeve (18) the distributor shaft (7) has an annular shoulder (24) which comes to bear against the end of the abutment sleeve (18), that is remote from the distributor (4).

4. A clamping arrangement according to one of claims 1 to 3 characterised in that at its end towards the distributor (4) the abutment sleeve (18) has an annular flange (25) which is in the form of a handle for adjusting the abutment sleeve (8) and on which is arranged the rotary bearing (17.2) for fixing the second switching bar (16.2).

5. A clamping arrangement according to one of claims 1 to 4 characterised in that at its end towards the clamping cylinder (1) the second switching bar (16.2) is connected to a slider (27.2) and the rotary bearing for fixing its axial position relative to the abutment sleeve (18) has a rotatable and axially non-displaceable bearing race (28) which is coaxial with respect to the abutment sleeve (18) and on which the slider (27.2) is suspended in axially positively locking relationship.

6. A clamping arrangement according to one of claims 1 to 5 characterised in that the first switching bar (16.1) which is axially fixed relative to the clamping cylinder (1) is guided in a guide receiving means (29) of a guide housing (15) secured to the distributor housing (5) and is adapted therein to form a guide body (30) provided with a guide receiving means (31) for the second switching bar (16.2) which is axially fixed relative to the abutment sleeve (18) and which is laterally displaced with respect to the first switching bar (16.1).

7. A clamping arrangement according to claim 6 characterised in that perpendicularly to the axis of the clamping cylinder the guide body (30) and the guide receiving means (29) of the guide housing (15) are of rectangular cross-section and the second switching bar (16.2) and the guide receiving means (31) provided for same in the guide body (30) are of circular cross-section, wherein said guide receiving means (31) is opened through an axially extending slot (32) out of which the second switching portion (13.2) arranged on the second switching bar (16.2) projects towards one of the switching members (14.1. 14.2) secured to the guide housing (15).

## Revendications

1. Dispositif de serrage pour machines-outils comportant un vérin de serrage (1) rotatif et un piston de serrage (2) coulissant dans la direction axiale disposé à l'intérieur de celui-ci, un distributeur (4) qui comprend un corps de distributeur (5) portant les raccords (6) pour le fluide de travail et un arbre de distributeur (7) lié au piston de serrage (2), qui coulisse axialement dans la paroi du vérin de serrage et sur lequel le corps de distributeur (5) est monté de telle sorte que l'arbre de distributeur (7) puisse tourner dans le corps de distributeur (5) et entraîne ce dernier lors des déplacements axiaux du piston de serrage (2), ainsi qu'un dispositif de contrôle (12) pour les déplacements axiaux du piston de serrage (2), qui comporte au moins un premier élément de déclenchement (13.1) et au moins un organe de commutation (14.1) actionné par celui-ci dans une des deux positions extrêmes de la course du piston de serrage, parmi lesquels l'un est lié au corps de distributeur (5) et l'autre est disposé sur une tige de déclenchement (16.1) qui est guidée avec possibilité de coulissement dans la direction longitudinale dans le corps de distributeur (5) et est immobilisée axialement par rapport par rapport au vérin de serrage (1) à l'aide d'un palier (17.1) disposé sur le vérin de serrage (1), le dispositif de contrôle (12) comportant en outre un deuxième élément de déclenchement (13.2) qui actionne le même organe de commutation ou un second organe de commutation (14.2) dans l'autre position extrême de la course du piston de serrage, caractérisé par le fait que le vérin de serrage (1), du côté tourné vers le corps de distributeur (5), porte une bague de butée (18) coaxiale avec l'arbre de distributeur (7), dans laquelle l'arbre de distributeur (7) peut coulisser axialement, la bague de butée (18) formant pour l'arbre de distributeur (7) une butée (19) de limitation de la course du piston de serrage et pouvant être réglée et immobilisée dans la direction axiale sur le vérin de serrage (1) et par le fait que le deuxième élément de déclenchement (13.2) ou le deuxième organe de commutation (14.2) est disposé sur une deuxième tige de déclenchement (16.2) qui est guidée avec possibilité de coulissement dans la direction axiale sur le corps de distributeur (5) et est immobilisée en translation par rapport à la bague de butée (18) au moyen d'un palier (17.2) disposé sur ladite bague de butée (18).

2. Dispositif de serrage selon la revendication 1, caractérisé par le fait que la bague de butée (18), par son extrémité éloignée du distributeur (4), pénètre dans un collet (20) axial du vérin de serrage (1) et, par un filetage extérieur (21) est en prise avec un filetage intérieur (22) prévu dans le collet (20), de telle sorte que la position de la bague de butée (18) par rapport au vérin de serrage dans la direction axiale peut être réglée par rotation de ladite bague et par le fait qu'un contre-écrou (23) est vissé sur le filetage extérieur (21), lequel contre-écrou peut être serré contre le bord du collet (20) à des fins de blocage axial de la bague de butée (18).

3. Dispositif de serrage selon la revendication 1 ou 2, caractérisé par le fait que l'arbre de distributeur (7) présente un épaulement annulaire (24) d'appui sur la bague de butée (18), épaulement qui vient en appui sur l'extrémité de la bague de butée (18) éloignée du distributeur (4).

4. Dispositif de serrage selon une des revendications 1 à 3, caractérisé par le fait que la bague de butée (18), à son extrémité tournée vers le distributeur (4), porte un collet annulaire (25) qui est conformé en poignée pour le réglage de la bague de butée (18) et sur laquelle est disposé le palier (17.2) pour l'immobilisation de la deuxième tige de déclenchement (16.2).

5. Dispositif de serrage selon une des revendications 1 à 4, caractérisé par le fait que la deuxième tige de déclenchement (16.2), à son extrémité tournée vers le vérin de serrage (1) est liée à un curseur (27.2) et que le palier qui détermine sa position axiale par rapport à la bague de butée (18) présente une bague de palier (28) tournante, fixe dans la direction axiale, coaxiale avec la bague de butée (18), dans laquelle le curseur (27.2) est suspendu par complémentarité de formes dans la direction axiale.

6. Dispositif de serrage selon une des revendications 1 à 5, caractérisé par le fait que la première tige de déclenchement (16.1) immobilisée dans la direction axiale par rapport au vérin de serrage (1) est guidée dans un logement de guidage (29) d'un boîtier de guidage (15) fixé au boîtier de distributeur (5), lequel logement de guidage, à l'intérieur dudit boîtier de guidage, est conformé en élément de guidage (30) avec un logement de guidage (31) pour la deuxième tige de déclenchement (16.2), qui est décalée latéralement par rapport à la première tige de déclenchement (16.1) et est fixe axialement par rapport à la bague de butée (18).

7. Dispositif de serrage selon la revendication 6, caractérisé par le fait que, perpendiculairement à l'axe du vérin de serrage, l'élément de guidage (30) et le logement de guidage (29) du boîtier de guidage (15) ont une section carrée et que la deuxième tige de déclenchement (16.2) et le logement de guidage (31) prévu pour celle-ci dans l'élément de guidage (30) ont une section circulaire, ledit logement de guidage (31) étant ouvert par une fente (32) axiale à travers laquelle le deuxième élément de déclenchement (13.2) prévu sur la deuxième tige de déclenchement (16.2) fait saillie en direction d'un des organes de commutation (14.1, 14.2) fixés au boîtier de guidage (15).
